(19) Europäisches Patentamt
European Patent Office
Office européen des brevets

(11) Veröffentlichungsnummer: **0 317 836**
**B1**

(12) **EUROPÄISCHE PATENTSCHRIFT**

(45) Veröffentlichungstag der Patentschrift: **02.01.91**

(51) Int. Cl.$^5$: **C 08 G 73/10,** C 08 G 73/14

(21) Anmeldenummer: **88118750.4**

(22) Anmeldetag: **10.11.88**

(54) **Lösliche und/oder schmelzbare Polyimide und Polyamidimide und Verfahren zu deren Herstellung.**

(30) Priorität: **12.11.87 DE 3738457**

(43) Veröffentlichungstag der Anmeldung:
**31.05.89 Patentblatt 89/22**

(45) Bekanntmachung des Hinweises auf die Patenterteilung:
**02.01.91 Patentblatt 91/01**

(84) Benannte Vertragsstaaten:
**ES GR**

(56) Entgegenhaltungen:
**EP-A-0 245 815**

(73) Patentinhaber: **Chemie Linz Gesellschaft m.b.H.**
**St.Peter-Strasse 25**
**A-4021 Linz (AT)**

(72) Erfinder: **Greber, Gerd**
**Anzengruberstrasse 11**
**A-2540 Bad Vöslau (AT)**
Erfinder: **Gruber, Heinrich**
**Cottagegasse 82**
**A-1190 Wien (AT)**
Erfinder: **Sychra, Marcel**
**Friedhofstrasse 44/11**
**A-2103 Langenzersdorf (AT)**

(74) Vertreter: **Kunz, Ekkehard, Dr.**
**Chemie Holding AG Patentwesen St. Peter-Strasse 25**
**A-4021 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 317 836 B1**

Courier Press, Leamington Spa, England.

## Beschreibung

Die Erfindung beschreibt lösliche und/oder schmelzbare thermostabile Polyimide und Polyamidimide und Verfahren zu deren Herstellung.

Die bis heute technisch wichtigsten thermostabilen Polymere sind die vollaromatischen Polyimide, die extreme Thermostabilitäten aufweisen, aber weder schmelzbar noch löslich und daher nur aufwendig und teuer zu verarbeiten sind. Die etwas weniger thermostabilen aromatischen Polyamide sind ebenfalls unschmelzbar und in den meisten organsichen Lösungsmitteln unlöslich oder nur wenig löslich, so daß ihre Verarbeitung aus Lösung zu Fasern oder Folien mit großen Schwierigkeiten verbunden ist. Die schwierige Verarbeitbarkeit verteuert diese thermostabilen Polymeren ganz erheblich und schließt sie daher aus einer Reihe von interessanten Anwendungen aus.

Versuche zur Entwicklung von schmelzbaren oder besser löslichen thermostabilen Polymeren — z.B. durch Einbau von flexiblen Kettenelmenten ($—CH_2—$, —O—, —S—, —CO—) oder sterisch anspruchsvollen Gruppen waren zwar erfolgreich, führten bisher jedoch immer zu einer meist beträchtlichen Einbuße an Thermostabilität. Hierher gehören auch die Polyamidimide (US—PS 3 895 064, US—PS 4 724 257), Polymide (JP-Kokai 1987 — 15228), Polyamide (US—PS 4 621 134) und Polyesterimide, in denen aromatische Amid-, Imid-, Amid- und Imid- bzw. Ester-und Imidgruppen statistisch angeordnet sind, die meist löslich sind oder thermoplastische Eigenschaften besitzen, aber ebenfalls eine geringe Thermostabilität aufweisen.

Die eigentliche Problemlösung auf dem Gebiet der thermostabilen Polymeren liegt also noch imer auf der Entwicklung von neuen Produkten mit hoher Thermostabilität und gleichzeitig guter Verarbeitbarkeit.

Aufgabe der vorliegenden Erfindung war es, neue Polyimide und Polyamidimide zu entwickeln, die bei extremer Thermostabilität in der cyclisierten Form löslich und/oder schmelzbar und somit nach hekömmlichen Methoden einfach verarbeitbar sind.

Es wurde nun gefunden, daß diese Aufgabe mit Hilfe von Polyimiden bzw. Polyamidimiden gelöst werden kann, die als Kettenbausteine Blöcke aus aromatischen Tri- oder Tetracarbonsäureresten und Resten mindestens zweier verschiedener Diamine enthalten, von denen mindestens aus über —S— und $—SO_2$-Brücken verbundenen Benzolringen besteht.

Gegenstand der vorliegenden Erfindung sind demnach lösliche und/oder schmelzbare Polyimide oder Polyamidimide der allgemeinen Formel I des Formelblattes, worin

R einen divalenten Rest der Formel II des Formelblattes,

Ar trivalente oder tetravalente gegebenenfalls ein- oder mehrfach durch Halogen substituierte aromatische Reste oder Gemische derselben, wobei der trivalente aromatische Rest gegebenenfalls zusätzlich eine Carboxylgruppe als Substituenten enthalen kann,

X falls Ar trivalent ist, den Amidrest —CO—NH— und falls Ar tetravalent ist, den Imidrest der Formel III des Formelblattes, wobei jeweils N an R gebunden ist,

$R_1$ divalente aromatische Reste der Formeln IV bis VIII des Formelblattes oder Gemische derselben, wobei A für $—CH_2—$, $—C(CH_3)_2—$, —O—, —S—, —SO—, $—SO_2—$, —CO—, —COO—, —CO—NH—, —NH—, —(N-Alkyl)- mit 1 bis 20 C-Atomen, —(N-Aryl)- mit 6 bis 60 C-Atomen oder —N=N— steht und

n eine ganze Zahl von 2 bis 200 bedeuten.

Erfindungsgemäß kommen alle bekannen tri- oder tetravalenten aromatischen Reste Ar in Frage, die sich insbesondere von den entsprechenden Tri- oder Tetracarbonsäuren bzw. ihren Derivaten, wie beispielsweise Anhydriden, Estern oder Säurechloriden ableiten. Beispiele dafür sind Reste von Aromaten, kondensierten Aromaten, Heteroaromaten, sowie deren Derivaten. Bevorzugte tri-oder tetravalente Reste Ar sind der Benzolrest oder der Benzophenonrest. Weiters bevorzugt sind solche Polyamidimide der allgemeinen Formel I des Formelblattes, die sowohl trivalente als auch tetravalente Reste Ar enthalten. Die Reste Ar können auch substituiert sein.

Falls der trivalente Rest Ar zusätzlich eine Carboxylgruppe als Substituenten enthält, sich also von einer Tetracarbonsäure ableitet, dann liegt das erfindungsgemäße Polymer in Form einer Amidsäure vor, die in ortho-Stellung zur Amid-Bindung eine Carboxylgruppe aufweist.

Die erfindungsgemäßen Polyimide oder Polyamidimide der allgemeinen Formel I des Formelblattes können dadurch hergestellt werden, daß man Tetracarbonsäuren oder deren Derivate der allgemeinen Formel IX des Formelblattes, in der R, Ar und X die oben angeführte Bedeutung haben, und Y und Z entweder gemeinsam den Anhydridrest —CO—O—CO—, oder für sich allein und unabhängig voneinander die Reste —COOH, —COCl oder $COOR_2$ bedeuten, wobei $R_2$ für einen Alkylrest mit 1 bis 20 C-Atomen oder für einen Arylrest mit 6 bis 20 C-Atomen steht, in an sich bekannter Weise mit aromatischen Diaminen der algemeinen Formel X des Formelblattes, in der $R_1$ die oben angegebene Bedeutung hat, umsetzt, und die zunächst entstehenden Polyamidsäuren chemisch oder thermisch cyclisiert.

Die Herstellung der erfindungsgemäßen Polyimide oder Polyamidimide erfolgt vorzugsweise in an sich bekannter Weise in stark polaren Lösungsmitteln, wie z.B. Dimethylformamid (DMF), Dimethylacetamid (DMA), N-Methylpyrrolidon (NMP), Dimethylsulfoxid (DMSO), Tetramethylharnstoff oder Hexamethylphosphorsäuretriamid bei Reaktionstemperaturen von −30 bis 30°C (J.Polym.Sci., A3 (1965) 1373—1390). Die vorerst resultierenden Lösungen der Polyamidsäuren bzw. Polyamidamidsäuren besitzen inhärente Viskositäten von 0,1 bis 4,0 dl/g (0,5%, 25°C). Die erreichten Viskositäten hängen vor allem von der Reinheit der eingesetzten Komponenten ab. Hohe Viskositäten können beispielsweise durch

Einsatz sehr reiner Ausgangsprodukte oder auch durch nachträgliche Zugabe sehr geringer Mengen eines der beiden Partner erzielt werden.

Die Polyamid- bzw. Polyamidamidsäurelösungen können in bekannter Weise in Folien und Fasern übergeführt und anschließend beispielsweise thermisch unter Wasserabspaltung zu Polyimiden bzw. Polyamidimiden cyclisiert werden, wobei zum Schluß für eine quantitative Cyclisierung Temperaturen bis etwa 300°C notwendig sein können. Grunsätzlich sind solche Lösungen auch zur Laminierung einsetzbar, wobei jedoch das abgespaltene Wasser stört, so daß man hier zweckmäßigerweise den großen Vorteil der erfindungsgemäßen Polyimide und Polyamidimide ausnützt, daß sie auch in der cyclisierten Form noch gut in polaren Lösungsmitteln löslich sind.

Will man die Polyimide bzw. Polyamidimide dagegen in Pulverform isolieren, etwa als Preßpulver zur thermoplastischen Verformung, dann cyclisiert man beispielsweise chemisch mit Hilfe wasseraufnehmender Agentien, wie z.B. Essigsäureanhydrid, gegebenenfalls in Gegenwart von Pyridin oder anderen Basen. Die so erhaltenen Polyimide bzw. Polyamidimide können nun entweder unter Druck thermoplastisch verformt werden oder in polaren Lösungsmitteln gelöst werden. Aus solchen Lösungen kann man Folien, Fasern und Laminate herstellen, wobei der große Vorteil darin besteht, daß nach Entfernen des Lösungsmittels bereits fertig cyclisierte Polyimide und Polyamidimide vorliegen, also z.B. kein Wasser mehr abgespalten werden muß, was vor allem für Laminierungen von großer Bedeutung ist.

Die erfindungsgemäßen Polyimide und Polyamidimide sind in der voll cyclisierten Form in polaren Lösungsmitteln, wie z.B. Dimethylformamid, Dimethylacetamid oder N-Methylpyrrolidon in Konzentrationen bis ca. 20 Gew.% löslich. Sie besitzen Glastemperaturen zwischen 245 uns 285°C und sind unter Druck thermoplastisch verformbar.

Die Thermostabilitäten liegen bei den erfindungsgemäßen Polyimiden und Polyamidimiden bis zu 545°C, gemessen in Luft mittels thermogravimetrischer Analyse (TGA) bei einer Aufheizgeschwindigkeit von 10°C/min (5% Gewichtsverlust).

Neben diesen ausgezeichneten Thermostabilitäten besitzen die erfindungsgemäßen Polyimide und Polyamidimide auch sehr gute mechanische (Zugfestigkeiten von ca. 60 bis 120 MPa, E-Module von ca. 1 800 bis ca. 3 300 MPa, Reißdehnungen von ca. 3 bis ca. 13%) und elektrische (dielektrische Verlustfaktoren von ca. 0,001 bis ca. 0,008) Eigenschaften sie zählen also zu den Hochleistungswerkstoffen.

Um Polyimide oder Polyamidimide mit gezielten Eigenschaften, etwa einer bestimmten Glastemperatur, herzustellen, können auch Gemische verschiedener Tetracarbonsäuren bzw. ihrer Derivate gemäß algemeiner Formel IX, sowie Gemische verschiedener Diamine gemäß allgemeiner Formel X des Formelblattes eingesetzt werden.

Die Tetracarbonsäuren und ihre Derivate der allgemeinen Formel IX des Formelblattes sind in der gleichzeitig eingereichten DE 37 38 456 beschrieben. Sie können beispielsweise durch Umsetzung von bekannten Tri- oder Tetracarbonsäuren oder deren Derivaten mit dem Diamin der Formel XI des Formelblattes, worin R die obige Bedeutung hat, in stark polaren Lösungsmitteln hergestellt und anschließend aus der Reaktionslösung isoliert werden.

Anstelle der isolierten Tetracarbonsäuren oder deren Derivaten der allgemeinen Formel IX des Formelblattes können diese bevorzugt auch direkt nach ihrer Synthese, bei der vorzugsweise stöchiometrische Mengen der Einsatzstoffe verwendet werden, ohne sie aus dem Reaktionsgemisch zu isolieren, mit aromatischen Diaminen der allgemeinen Formel X des Formelblattes umgesetzt werden.

Bevorzugte Tetracarbonsäurederivate gemäß allgemeiner Formel IX, die erfindungsgemäß mit den Diaminen der allgemeinen Formel X umgesetzt werden, sind die Tetracarbonsäuredianhydride gemäß allgemeiner Formel IX des Formelblattes.

Im Falle der Umsetzung von Tetracarbonsäuren bzw. deren Anhydriden gemäß allgemeiner Formel IX mit den Diaminen der allgemeinen Formel X des Formelblattes wird bei der Cyclisierung der zunächst entstehenden Polyamidsäuren zu den erfindungsgemäßen Polyimiden bzw. Polyamidimiden gemäß allgemeiner Formel I des Formelblattes Wasser abgespalten. Im Falle der Umsetzung der entsprechenden Tetracarbonsäurechloride, Tetracarbonsäureester bzw. der gemischten Tetracarbonsäureesterchloride gemäß allgemeiner Formel IX des Formelblattes wird bei der Cyclisierung HCl, Alkohol bzw. ein Hydroxyaromat, beispielsweise Phenol, abgespalten.

Als aromatische Diamine der allgemeinen Formel X des Formelblattes kommen auch Verbindungen in Betracht, in denen $R_1$ einen oder mehrere, direkt oder über Brückenglieder miteinander verbundene aromatische Reste darstellt, die gegebenenfalls weitere substituiert sind, beispielsweise durch Alkyl- oder Alkoxygruppen oder durch Halogenatome.

Die Herstellung des Diamins gemäß Formel XI des Formelblattes erfolgt beispielsweise gemäß DE 3738456 durch Umsetzung des Na-Salzes von Bis-(4-mercaptophenyl)diphenylsulfon mit überschüssigem 4-Chlornitgrobenzol zu 1,4-Bis-(4-nitrophenylthio)diphenylsulfon und anschließende Reduktion der Nitrogruppen.

In den folgenden Beispielen wird die Herstellung der neuen Polyimide und Polyamidimide näher erläutert, wobei neue Tetracarbonsäuredianhydride der allgemeinen Formeln XII, XIII und XIV des Formelblattes mit verschiedenen Diaminen gemäß allgemeiner Formel X des Formelblattes umgesetzt wurden:

Bei Verwendung des Dianhydrids gemäß Formel XII des Formelblattes wurden Polyamidamidsäuren erhalten, die anschließend zu Polyamidimiden cyclisiert wurden (Beispiele 1 bis 4). Bei Verwendung des

Dianhydrids gemäß Formel XIII und XIV des Formeblattes erhielt man Polyamidsäuren, die zu Polyimiden cyclisiert wurden. (Beispiele 5, 6, 7, 13, 14). In den Beispielen 8 bis 12 wurde ein Dianhydrid aus Benzophenontetracarbonsäuredianhydrid (BTDA) und 1,4-Bis(4-aminophenylthio)diphenylsulfon hergestellt, das im Reaktionsgemisch, ohne Isolierung, direkt mit verschiedenen Diaminen gemäß allgemeiner Formel X des Formelblattes umgesetzt wurde, wobei man Polyamidsäuren erhielt, die anschließend zu den entsprechenden Polyimiden cyclisiert wurden.

## BEISPIELE

Herstellung der Tetracarbonsäuredianhydride

a) Herstellung des Dianhydrids gemäß Formel XII des Formelblattes (Dianhydrid XII)

Ansatz:

10,85 g (0,05 Mol) Trimellithsäureanhydridchlorid (TMACl)
9,30 g (0,02 Mol) 1,4-Bis(4-aminophenylthio)diphenylsulfon (BDS)
90 ml abs. N-Methyl-2-Pyrrolidon (NMP

Die Apparatur, bestehend aus einem 250 ml-Dreihalskolben mit mechanischem Rührer, Thermometer, Tropftrichter mit Trockenrohr und Stickstoffeinleitungsohr wird im trockenen Stickstoffstrom ausgeflammt. TMACl wird in 25 ml NMP gelöst, mit Trockeneis/Aceton auf −40°C abgekühlt und bei dieser Temperatur BDS in 65 ml NMP während 30 Min. zugetropft. Das Reaktionsgemisch wird nach weiteren 30 Min. bei −40°C langsam auf Raumtemperatur erwärmt und anschließend noch 3 Stunden gerührt.

Die erhaltene viskose Lösung wird unter Ausschluß von Luftfeuchtigkeit unter Rühren bei 10°C in 500 ml abs. Benzol eingetropft, bis nach etwa 1 Stunde ein hellgelber Niederschlag ausfällt, der abfiltriert, mit kaltem und heißem abs. Benzol gewaschen und anschließend bei 60°C im Vakuumtrockenschrank getrocknet wird. Das Rohprodukt wird aus abs. Acetanhydrid umkristallisiert.

Ausbeute: 14,7 g (90% d. Th.), Schmelzpunkt: 282—288°C

| Analyse: | berechnet (%) | gefunden (%) |
|---|---|---|
| $C_{42}$ | 62,05 | 61,62 |
| $H_{24}$ | 2,98 | 3,16 |
| $N_2$ | 3,45 | 3,56 |
| $S_3$ | 11,83 | 12,24 |
| $O_{10}$ | — | — |

b) Herstellung des Dianhydrids gemäß Formel XIII des Formelblattes (Dianhydrid XIII)

Ansatz:

6,4446 g (0,02 Mol) Benzophenontetracarbonsäuredianhydrid (BTDA)
4,6464 g (0,01 Mol) 1,4-Bis(4-aminophenylthio)diphenylsulfon (BDS)
3,6 g (0,035 Mol) Acetanhydrid
60 ml abs. Dimethylacetamid (DMA)

In einer trockenen Apparatur, bestehend aus einem 100 ml-Dreihalskolben, Magnetrührer, Rückflußkühler, Tropftrichter, Stickstoffeinleitungsrohr, Thermometer und Trockenrohr wird das BTDA in 25 ml DMA gelöst. BDS in 35 ml DMA gelöst, wird während 15 Min. bei Raumtemperatur zugetropft und das Reaktionsgemisch auf 90°C erhitzt. Nach 30 Min. werden 3,6 g Acetanhydrid zugegeben und die Temperatur für 1 Stunde auf 125°C erhöht. Die dunkelbraune Lösung wird einrotiert, aus abs. Acetanhydrid umkristallisiert und anschließend im Vakuumtrockenschrank bei 90°C getrocknet.

Ausbeute: 9,5 g (88% d. Th.), Schmelzpunkt 238—242C

| Analyse: | berechnet (%) | gefunden (%) |
|---|---|---|
| $C_{58}$ | 64,92 | 64,37 |
| $H_{28}$ | 2,64 | 2,92 |
| $N_2$ | 2,61 | 2,39 |
| $S_3$ | 8,96 | 8,76 |
| $O_{14}$ | — | — |

c) Herstellung des Dianhydrids gemäß Formel XIV des Formelblattes (Dianhydrid XIV)

Ansatz:

9,597 g (0,044 Mol) Pyromellithsäuredianhydrid (PMDA)
9,293 g (0,02 Mol) 1,4-Bis(4-aminophenylthio)diphenylsulfon (BDS)
7,2 g (0,07 Mol) abs. Acetanhydrid
100 ml abs. DMA

In einer trockenen Apparatur, bestehend aus einem 250 ml-Dreihalskolben, Magnetrührer, Rückflußkühler, Tropftrichter, Stickstoffeinleitungsrohr, Thermometer und Trockenrohr wird das PMDA in 35 ml DMA gelöst. BDS in 65 ml DMA gelöst, wird während 15 Min bei Raumtemperatur zugetropft und das Reaktionsgemisch auf 90°C erhitzt. Nach 30 Min werden 7,2 g Acethanhydrid zugegeben und die Temperatur für 1 Stunde auf 125°C erhöht. Die erhaltene viskose Lösung wird unter Ausschluß von Luftfeuchtigkeit unter Rühren bei 10°C in 500 ml abs. Benzol eingetropft, der ausgefallene gelbe Niederschlag abfiltriert, mit kaltem und heißem abs. Benzol gewaschen und anschließend bei 60°C im Vakuumtrockenschrank getrocknet. Das Rohprodukt wird aus abs. Acetanhydrid umkristallisiert.

Ausbeute: 14,4 g (83% d. Th.), Schmelzpunkt: 256—261°C

| Analyse: | berechnet (%) | gefunden (%) |
|---|---|---|
| $C_{44}$ | 61,11 | 60,83 |
| $H_{20}$ | 2,33 | 2,57 |
| $N_2$ | 3,24 | 3,03 |
| $S_3$ | 11,12 | 10,98 |
| $O_{12}$ | — | — |

## Beispiel 1

a) Herstellung einer Polyamidamidsäure aus dem Dianhydrid XII und 4,4′-Methylendianilin (MDA)

Ansatz:

2,0322 g (2,5 mMol) Dianhydrid XII
0,4957 g (2,5 mMol) MDA
20 ml abs. N-Methylpyrrolidon (NMP)

Die Apparatur, bestehend aus einem 50 ml-Dreihalskolben, Tropftrichter mit Trockenrohr, Magnetrührer und Stickstoffeinleitungsrohr wurde im trockenen Stickstoffstrom ausgeflammt. MDA wurde in 5 ml N MP vorgelegt und die Lösung auf 0°C abgekühlt. Das Dianhydrid XII, in 15 ml NMP gelöst, wurde dann während 10 Minuten zu der Diaminlösung zugetropft und das Reaktionsgemisch 1 Stunde bei Raumtemperatur gerührt. Man erhielt eine Polyamidamidsäure (PAAS) mit einer inhärenten Viskosität von 0,49 dl/g (0,5% in NMP, 25°C).

b) Herstellung einer Folie aus der nach Beispiel 1a) erhaltenen Polyamidamidsäure

Die nach Beispiel 1a) erhaltene Polyamidamidsäure (PAAS) wurde im Rotavapor auf ca. 30 Gew.% eingeengt, worauf die Polymerlösung mit Hilfe eines Folienziehgerätes (0,5 mm Spalthöhe) auf eine

gereinigte Glasplatte aufgetragen wurde. Die thermische Überführung der PAAS in das Polyamidimid erfolgte z.B. im Vakuum nach folgendem Temperaturprogramm:

| | | |
|---|---|---|
| 16 | Stunden bei | 50°C |
| 0,5 | Stunden bei | 70°C |
| 0,5 | Stunden bei | 90°C |
| 0,5 | Stunden bei | 100°C |
| 0,5 | Stunden bei | 120°C |
| 0,5 | Stunden bei | 140°C |
| 0,5 | Stunden bei | 150°C |
| 2 | Stunden bei | 180°C |
| 0,5 | Stunden bei | 200°C |
| 1 | Stunde bei | 230°C |
| 1 | Stunde bei | 240°C |
| 1 | Stunde bei | 250°C |

Wie aus dem IR-Spektrum der Folie zu ersehen war, erfolgte dabei eine vollständige Cyclisierung. Die thermischen und mechanischen Eigenschaften sind in Tabelle 1 angegeben.

c) Herstellung eines Preßpulvers aus der nach 1a) erhaltenen Polyamidamidsäure

Zur Herstellung eines Preßpulvers wurden ca. 10 g einer etwa 20 Gew.% Lösung de nach 1a) erhaltenen Polyamidamidsäure in 30 ml eines Gemisches aus 3 Volumenteilen Pyridin und 2 Volumenteilen Essigsäureanhydrid eingetropft und 20 Stunden bei Raumtemperatur gerührt, wobei eine gelbe, gelartige Suspension ausfiel. Diese wurde sodann auf ein Gemisch aus je einem Volumenteil Wasser und Methanol getropft und die entstehende Suspension mit einem "Turrax"-Mixer homogenisiert. Das entstandene gelbe Pulver wurde abgenutscht, gründlich mit Methanol gewaschen und bei 130°C im Vakuumtrockenschrank gewichtskonstant getrocknet. Erfindungsgemäß kann man bei dieser chemischen Cyclisierung ohne merkbare Beeinträchtigung des Imidisierungsgrades das Pyridin auch weglassen.

Beispiel 2 bis 4

Analog zu den in Beispiel la bis c angegebenen Arbeitsvorschriften wurden Polyamidamidsäuren (PAAS) und Polyamidimide (PAI) erhalten, wobei jedoch an Stelle von MDA als Diamine 2,4-Toluylendiamin (TDA), 4,4-Diaminodiphenylsulfon (DS), bzw. 4,4'-Diaminodiphenylether (DAE) bei teilweise unterschiedlichen Reaktionszeiten verwendet wurden. Die Eigenschaften der erhaltenen PAAS und PAI sowie die Reaktionszeiten sind in Tabelle 1 zusammengestellt.

Beispiel 5

Herstellung einer Polyamidsäure (PAS) aus dem Dianhydrid XIII und 4,4'-Methylendianilin (MDA)

Ansatz:

1,6096 g (1,5 mMol) Dianhydrid XIII
0,2974 g (1,5 mMol) MDA
20 ml abs. Dimethylacetamid (DMA)
5 ml abs. N-Methyl-2-pyrrolidon (NMP)

In der in Beispiel 1a) beschriebenen Apparatur wurde das Dianhydrid XIII in 10 ml des Lösungsmittelgemisches aus DMA und NMP gelöst, auf 0°C abgekühlt und eine Lösung von MDA in 15 ml des Lösungsmittelgemisches aus DMA und NMP, während 15 Minuten zugetropft. Nach 30 Minuten entfernte man die Kühlung und rührte das Reaktionsgemisch 20 Stunden bei Raumtemperatur. Man erhielt eine Polyamidsäure mit einer inhärenten Viskosität von 0,25 dl/g (0,5% in DMA, 25°C), die analog Beispiel 1 b bzw. 1c thermisch bzw. chemisch zum Polyimid cyclisiert wurde. Die Thermostabilität und die mechanischen Eigenschaften des Polyimids sind in Tabelle 1 angegeben.

Beispiel 6 und 7

Analog au der in Beispiel 5 angegebenen Arbeitsvorschrift erhielt man aus dem Dianhydrid XIII und TDA bzw. DAE die entsprechenden Polyamidsäuren und Polyimide. Die Eigenschaften sind in Tabelle 1 zusammengestellt.

Beispiel 8

Herstellung eines geordneten Polyimides aus Benzophenontetracarbonsäure-dianhydrid (BTDA), 1,4-Bis(4-aminophenylthio)diphenylsulfon (BDS) und 4,4'-Methylendianilin (MDA).

Ansatz:

3,2223 g (10 mMol) BTDA
2,2070 g (4,75 mMol) BDS
1,0410 g (5,25 mMol) MDA
60 ml abs. Dimethylacetamid (DMA)

In der im Beispiel 1a) beschriebenen Apparatur wurde das BTDA in 30 ml DMA gelöst, auf 0°C abgekühlt und BDS in 20 ml DMA gelöst, während 10 Minuten zugetropft. Nach 20 Minuten entfernte man die Kühlung und rührte das Reaktionsgemisch 2 Stunden bei Raumtemperatur. Danach wurde das MDA, gelöst in 10 ml DMA, bei 0°C innerhalb von 10 Minuten zugetropft. Nach 1 Stunde Rühren bei Raumtemperatur erhielt man eine Polyamidsäure mit einer inhärenten Viskosität von 0,53 dl/g (0,5% in DMA, 25°C), die analog Beispiel 1b) bzw. 1c) thermisch bzw. chemisch zum Polyimid cyclisiert wurde. Die Thermostabilität und die mechanischen Eigenschaften des Polyimids sind in Tabelle 1 angegeben.

Beispiel 9 bis 12

Analog der im Beispiel 8 angegebenen Arbeitsvorschriften erhielt man aus BTDA, BDS und TDA bzw. DS bzw. DAE bzw. p-Phenylendiamin (PPD) die mit ihren Eigenschaften in Tabelle 1 angegebenen geordneten Polyamidsäuren und Polyimide. Die zu Beispiel 8 unterschiedlichen Reaktionszeiten sind ebenfalls in Tabelle 1 angeführt.

Beispiel 13

Herstellung einer Polyamidsäure aus dem Dianhydrid XIV und 4,4'-Methylendianilin (MDA)

Ansatz:

1,2973 g (1,5 mMol) Dianhydrid XIV
0,2974 g (1,5 mMol) MDA
20 ml abs. Dimethylacetamid (DMA)
5 ml abs. N-Methyl-2-pyrrolidon (NMP)

In der im Beispiel 1a) beschriebenen Apparatur wurde das Dianhydrid XIV in 10 ml des Lösungsmittelgemisches aus DMA und NMP gelöst, auf 0°C abgekühlt und eine Lösung von MDA in 15 ml des Lösungsmittelgemisches aus DMA und NMP während 15 Minuten zugetropft. Nach 30 Minuten entfernte man die Kühlung und rührte das Reaktionsgemisch 20 Stunden bei Raumtemperatur. Man erhielt eine Polyamidsäure mit einer inhärenten Viskosität von 3,10 dl/g (0,5% in DMA, 25°C), die analog Beispiel 1b bzw. 1c) thermsich bzw. chemisch zum Polyimid cyclisiert wurde. Die erzielte hohe Viskosität wurde vor allem durch Verwendung besonders reiner Ausgangsprodukte möglich.

Die Thermostabilität des Polyimids ist in Tabelle 1 angegeben.

Beispiel 14

Analog der im Beispiel 13 angegebenen Arbeitsvorschrift erhielt man aus dem Dianhydrid XIV und DAE die in Tabelle 1 angegebene Polyamidsäure und das Polyimid.

TABELLE 1

| Dianhydrid | Diamin | Reakt. zeit (h) | Visc. (dl/g) | Tg (°C) | TGA (°C) | Zugfestigkeit (MPa) | E-Modul (MPa) | Reißdehnung (%) |
|---|---|---|---|---|---|---|---|---|
| 1 XII | MDA | 1 | 0,49 | 245 | 455 | 76 ± 13 | 3300 ± 300 | 5 ± 2 |
| 2 XII | TDA | 15 | 0.40 | 280 | 455 | 69 ± 7 | 3200 ± 200 | 3 ± 2 |
| 3 XII | DS | 50 | 0,20 | 250 | 460 | 83 ± 3 | 3300 ± 400 | 4 ± 1 |
| 4 XII | DAE | 1 | 0,53 | 245 | 470 | 81 ± 19 | 3100 ± 100 | 5 ± 2 |
| 5 XIII | MDA | 20 | 0,25 | 286 | 520 | 83 ± 6 | 3200 ± 200 | 6 ± 2 |
| 6 XIII | TDA | 20 | 0,20 | 280 | 515 | 98 ± 7 | 2500 ± 200 | 4 ± 1 |
| 7 XIII | DAE | 20 | 0,25 | 268 | 514 | 80 ± 5 | 1800 ± 200 | 6 ± 2 |
| 8 BTDA + BDS | MDA | 1 | 0,53 | 275 | 520 | 99 ± 7 | 2500 ± 200 | 13 ± 5 |
| 9 BTDA + BDS | TDA | 18 | 0,40 | 282 | 510 | 111 ± 4 | 2300 ± 100 | 8 ± 1 |
| 10 BTDA + BDS | DS | 40 | 0,30 | 285 | 545 | 102 ± 6 | 2600 ± 400 | 4 ± 1 |
| 11 BTDA + BDS | DAE | 1 | 0,44 | 245 | 518 | 88 ± 4 | 3100 ± 400 | 5 ± 1 |
| 12 BTDA + BDS | PPD | 5 | 0,67 | 255 | 532 | 99 ± 13 | 2900 ± 500 | 5 ± 1 |
| 13 XIV | MDA | 20 | 3,10 | 248 | 495 | 82 ± 7 | 2700 ± 400 | 3 ± 1 |
| 14 XIV | DAE | 20 | 0,22 | 235 | 500 | 76 ± 5 | 3000 ± 600 | 4 ± 1 |

In Tabelle 1 verwendete Abkürzungen:

| | |
|---|---|
| BTDA | Benzophenontetracarbonsäuredianhydrid |
| BDS | 1,4-Bis(4-aminophenylthio)diphenylsulfon |
| MDA | 4,4'-Methylendianilin |
| TDA | 2,4-Toluylendiamin |
| DS | 4,4-Diminodiphenylsulfon |
| DAE | 4,4'-Diaminodiphenylether |
| PPD | p-Phenylendiamin |
| visc. | inhärente Viskosität (0,5%, 25°C) |
| Tg | Glastemperatur |
| TGA | Thermogravimetrische Analyse |

**Patentansprüche für den Vertragsstaat GR:**

1. Lösliche und/oder schmelzbare Polyimide oder Polyamidimide der allgemeinen Formel

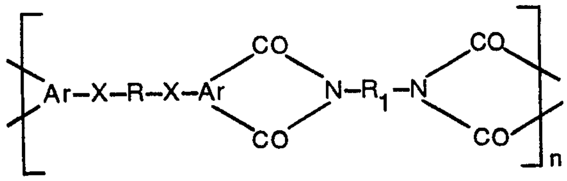

worin

R einen divalenten Rest der Formel

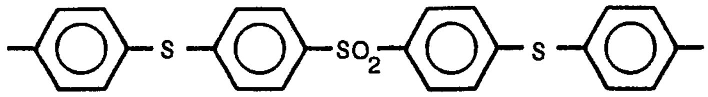

Ar trivalente oder tetravalente, gegebenenfalls ein- oder mehrfach durch Halogen substituierte aromatische Reste oder Gemische derselben, wobei der trivalente aromatische Rest gegebenenfalls zusätzlich eine Carboxylgruppe als Substituenten enthalten kann,

X falls Ar trivalent ist, den Amidrest —CO—NH— und falls Ar tetravalent ist, den Imidrest

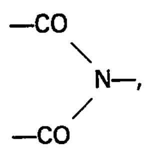

wobei jeweils N an R gebunden ist,

$R_1$ divalente aromatische Reste der Formeln

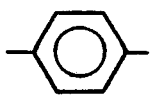

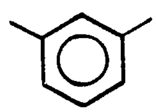

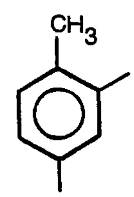

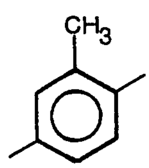

oder

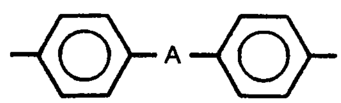

oder Gemische derselben, wobei A für $—CH_2—$, $—C(CH_3)_2—$, —O—, —S—, —SO—, $—SO_2—$, —CO—, —COO—, —CO—NH—, —NH—, —(N-Alkyl)- mit 1 bis 20 C-Atomen, —(N-Aryl)- mit 6 bis 60 C-Atomen oder —N=N— steht und

n eine ganze Zahl von 2 bis 200 bedeuten.

2. Polyamidimide gemäß Anspruch 1, dadurch gekennzeichnet, daß sie sowohl trivalente als auch tetravalente aromatische Reste Ar enthalten.

3. Polyimide gemäß Anspruch 1, dadurch gekennzeichnet, daß der tetravalente Rest Ar einen Benzophenonrest darstellt.

4. Polyimide oder Polyamidimide gemäß einem der Ansprüche 1 bis 3, dadurch gekennzeichnet, daß der aromatische Rest Ar einen Benzolrest darstellt.

5. Verfahren zur Herstellung von löslichen und/oder schmelzbaren Polyimiden oder Polyamidimiden gemäß einem der Ansprüche 1 bis 4, dadurch gekennzeichnet, daß man Tetracarbonsäuren oder deren Derivate der allgemeinen Formel

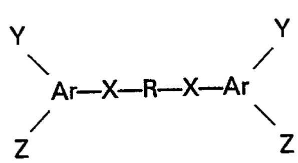

in der R, Ar und X die oben angeführte Bedeutung haben, und Y und Z entweder gemeinsam den Anhydridrest —CO—O—CO— oder für sich allein und unabhängig voneinander die Reste —COOH, — COCl oder —$COOR_2$ bedeuten, wobei $R_2$ für einen Alkylrest mit 1 bis 20 C-Atomen oder für einen Arylrest mit 6 bis 20 C-Atomen steht, in an sich bekannter Weise mit aromatischen Diaminen der allgemeinen Formel $H_2N—R_1—NH_2$, in der $R_1$ die oben angegebene Bedeutung hat, umsetzt, und die zunächst entstehenden Polyamidsäuren chemisch oder thermisch cyclisiert.

6. Verfahren gemäß Anspruch 5, dadurch gekennzeichnet, daß als Tetracarbonsäurederivate Tetracarbonsäuredianhydride eingesetzt werden.

7. Verfahren gemäß Anspruch 5 oder 6, dadurch gekennzeichnet, daß man die Tetracarbonsäuren oder deren Derivate nach ihrer Bildung direkt, ohne sie aus dem Reaktionsgemisch zu isolieren, mit aromatischen Diaminen der allgemeinen Formel $H_2N—R_1—NH_2$ umsetzt, und die zunächst entstehenden Amidsäuren chemisch oder thermisch cyclisiert.

**Patentansprüche für den Vertragsstaat ES:**

1. Verfahren zur Herstellung von löslichen und/oder schmelzbaren Polyimiden oder Polyamidimiden der allgemeinen Formel

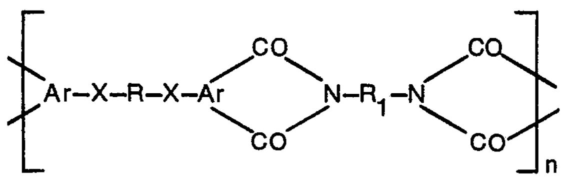

worin

R einen divalenten Rest der Formel

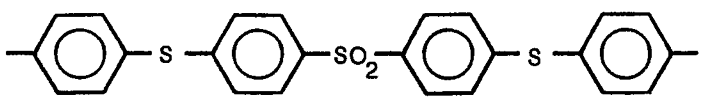

Ar trivalente oder tetravalente gegebenenfalls ein- oder mehrfach durch Halogen substituierte aromatische Reste oder Gemische derselben, wobei der trivalente aromatische Rest gegebenenfalls zusätzlich eine Carboxylgruppe als Substituenten enthalten kann,

X falls Ar trivalent ist, den Amidrest —CO—NH— und falls Ar tetravalent ist, den Imidrest

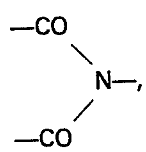

wobei jeweils N an R gebunden ist,

$R_1$ divalente aromatische Reste der Formeln

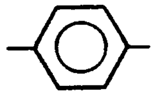

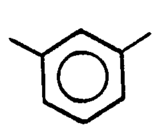

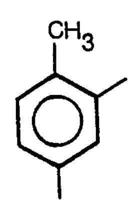

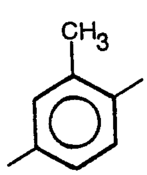

oder

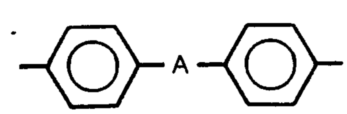

oder Gemische derselben, wobei A für —$CH_2$—, —$C(CH_3)_2$—, —O—, —S—, —SO—, —$SO_2$—, —CO—, —COO—, —CO—NH—, —NH—, —(N-Alkyl)- mit 1 bis 20 C-Atomen, —(N-Aryl)- mit 6 bis 60 C-Atomen oder —N=N— steht und

n eine ganze Zahl von 2 bis 200 bedeuten, dadurch gekennzeichnet, daß man Tetracarbonsäuren oder deren Derivate der allgemeinen Formel

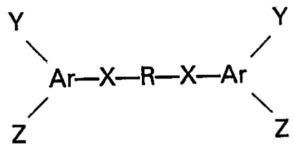

in der R, Ar und X die oben angeführte Bedeutung haben, und Y und Z entweder gemeinsam den Anhydridrest —CO—O—CO—, oder für sich allein und unabhängig voneinander die Reste —COOH, —COCl oder —$COOR_2$ bedeuten, wobei $R_2$ für einen Alkylrest mit 1 bis 20 C-Atomen oder für einen Arylrest mit 6 bis 20 C-Atomen steht, in an sich bekannter Weise mit aromatischen Diaminen der allgemeinen Formel $H_2N—R_1—NH_2$, in der $R_1$ die oben angegebene Bedeutung hat, umsetzt, und die zunächst entstehenden Polyamidsäuren chemisch oder thermisch cyclisiert.

2. Verfahren gemäß Anspruch 1, dadurch gekennzeichnet, daß die Polyamidimide sowohl trivalente als auch tetravalente aromatische Reste Ar enthalten.

3. Verfahren gemäß Anspruch 1, dadurch gekennzeichnet, daß der tetravalente Rest Ar einen Benzophenonrest darstellt.

4. Verfahren gemaß einem der Ansprüche 1 bis 3, dadurch gekennzeichnet, daß der aromatische Rest Ar einen Benzolrest darstellt.

5. Verfahren gemäß einem der Ansprüche 1 bis 4, dadurch gekennzeichnet, daß als Tetracarbonsäurederivate Tetracarbonsäuredianhydride eingesetzt werden.

6. Verfahren gemäß einem der Ansprüche 1 bis 5, dadurch gekennzeichnet, daß man die Tetracarbonsäuren oder deren Derivate nach ihrer Bildung direkt, ohne sie aus dem Reaktionsgemisch zu isolieren, mit aromatischen Diaminen de allgemeinen Formel $H_2N—R_1—NH_2$ umsetzt, und die zunächst entstehenden Amidsäuren chemisch odere thermisch cyclisiert.

**Revendications pour l'Etat Contractant: GR**

1. Polyimides et polyamides-imides solubles et/ou fusibles de formule générale:

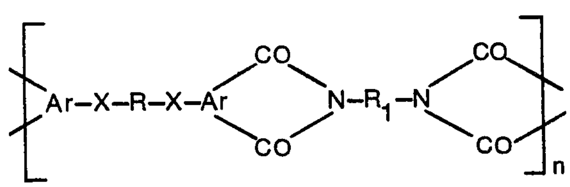

dans laquelle:

R est un groupe divalent de formule

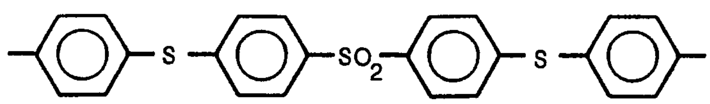

Ar est un groupe aromatique, trivalent ou tétravalent, substitué le cas échéant une ou plusieurs fois par des halogènes ou un mélange de ceux-ci, le groupe aromatique trivalent renferment éventuellement un groupe carboxyle comme substituant,

X désigne si Ar est trivalent un reste amide —CO—NH— et si Ar est tétravalent le reste imide

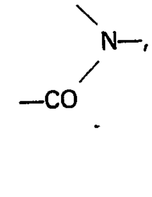

ou l'atome d'azote est relié à $R_1$

$R_1$ désigne des groupes aromatiques divalents de formule

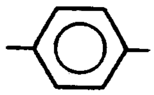

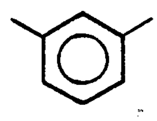

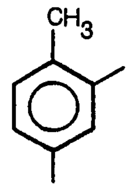

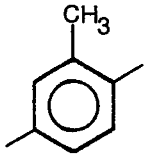

ou

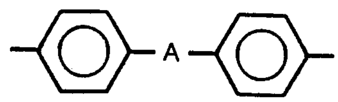

ou un mélange de ceux-ci, où A représente $-CH_2-$, $-C(CH_3)_2-$, $-O-$, $-S-$, $-SO-$, $-SO_2-$, $-CO-$, $-COO-$, $-CO-NH-$, $-NH-$, —(N-alkyl)— de 1 à 20 atomes de carbone, —(N-aryle)— de 6 à 20 atomes de carbone, ou $-N{=}N-$, et

n représente un nombre entier de 2 à 200.

2. Polyamides-imides selon la revendication 1, caractérisés en ce qu'ils renferment des groupes aromatiques Ar aussi bien trivalents que tétravalents.

3. Polyimides selon la revendication 1, caractérisés en ce que le groupe Ar tétravalent est un groupe benzophénone.

4. Polyimides ou polyamides-imides selon une des revendications 1 à 3, caractérisés en ce que le groupe Ar aromatique est un groupe benzènique.

5. Procédé de préparation de polyimides ou polyamides-imides solubles et/ou fusibles selon l'une des revendications 1 à 4, caractérisé en ce qu'on fait réagir des acides tétracarboniques ou leurs dérivés de formule générale:

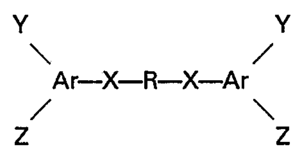

dans laquelle R, Ar et X ont la signification indiquée ci-dessus, et Y et Z signifient soit ensemble le groupe anhydre —CO—O—CO—, ou seuls et indépendants l'un de l'autre les groupes —COOH, —COCl ou $-COOR_2$ où $R_2$ désigne un reste alkyle ou 1 à 20 atomes de carbone ou un reste aryle de 6 à 20 atomes de carbone, avec des diamines aromatiques, de manière connue en soi; de formule générale

$$H_2N-R_1-NH_2$$

dans laquelle $R_1$ a la signification indiquée précédemment, puis on réalise une cyclisation chimique ou thermique des acides polyamides obtenus.

6. Procédé selon la revendication 5, caractérisé en ce qu'on utilise comme dérivés acides tétracarboniques des dianhydrides des acides tétracarboniques.

7. Procédé selon la revendication 5 ou 6, caractérisé en ce qu'on fait réagir les acides tétracarboniques ou leurs dérivés après leur préparation directement avec les diamines aromatiques de formule:

$$H_2N-R_1-NH_2$$

sans les isoler du milieu réactionnel et on réalise la cyclisation chimique ou thermique des acides amides obtenus.

**Revendications pour l'Etat Contractant: ES**

1. Procédé de préparation de polyimides ou polyamides-imides solubles et/ou fusibles de formule générale:

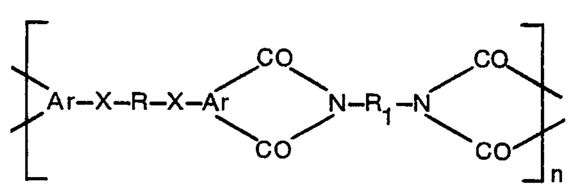

dans laquelle:

R est un groupe divalent de formule

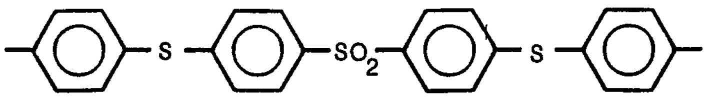

Ar est un groupe aromatique, trivalent ou tétravalent, substitué le cas échéant une ou plusieurs fois par des halogènes ou un mélange de ceux-ci, le groupe aromatique trivalent renferment éventuellement un groupe carboxyle comme substituant,

X désigne si Ar est trivalent un reste amide —CO—NH— et si Ar est tétravalent le reste imide

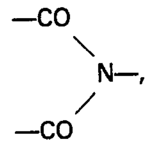

ou l'atome d'azote est relié à $R_1$

$R_1$ désigne des groupes aromatiques divalents de formule

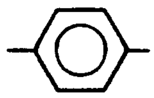
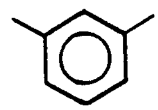
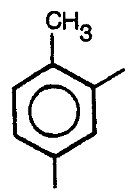

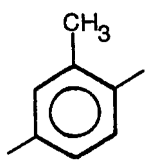

ou

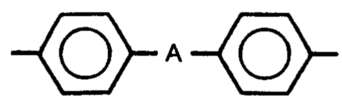

ou un mélange de ceux-ci, où A représente $—CH_2—$, $—C(CH_3)_2—$, —O—, —S—, —SO—, $—SO_2—$, —CO—, —COO—, —CO—NH—, —NH—, —(N-alkyl)— de 1 à 20 atomes de carbone, —(N-aryle)— de 6 à 20 atomes de carbone, ou —N=N—, et

n représente un nombre entier de 2 à 200, caractérisé en ce qu'on fait réagir des acides tétracarboniques ou leurs dérivés de formule générale:

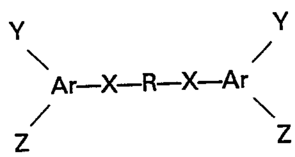

dans laquelle R, Ar et X ont la signification indiquée ci-dessus, et Y et Z signifient soit ensemble le groupe anhydre —CO—O—CO—, ou seuls et indépendants l'un de l'autre les groupes —COOH, —COCl ou $—COOR_2$ où $R_2$ désigne un reste alkyle ou 1 à 20 atomes de carbone ou un reste aryle de 6 à atomes de carbone, avec des diamines aromatiques, de manière connue en soi; de formule générale

$$H_2N—R_1—NH_2$$

dans laquelle $R_1$ a la signification indiquée précédement, puis on réalise une cyclisation chimique ou thermique des acides polyamides obtenus.

2. Procédé selon la revendication 1, caractérisé en ce que les polyamides-imides renferment des groupes aromatiques Ar aussi bien trivalents que tétravalents.

3. Procédé selon la revendication 1, caractérisé en ce que le groupe Ar tétravalent est un groupe benzophénone.

4. Procéde selon l'une des revendications 1 à 3, caractérisé en ce que le groupe aromatique Ar est un groupe benzénique.

5. Procédé selon l'une des revendications 1 à 4, caractérisé en ce qu'on utilise come dérivés acides tétracarboniques des dianhydrides des acides tétracarboniques.

6. Procédé selon l'une des revendications 1 à 5, caractérisé en ce qu'on fait réagir les acides tétracarboniques ou leurs dérivés après leur préparation directement avec les diamines aromatiques de formule:

$$H_2N—R_1—NH_2$$

sans les isoler du milieu réactionnel et on réalise la cyclisation chimique ou thermique des acides amides obtenus.

**Claims for the Contracting State: GR**

1. Soluble and/or fusible polyimides or polyamidoimides of the general formula

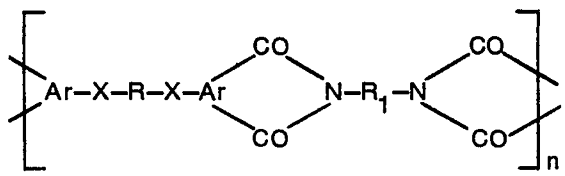

in which R denotes a divalent radical of the formula

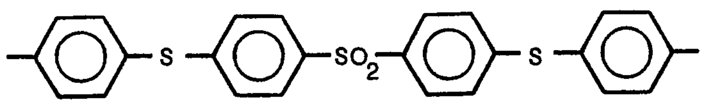

Ar denotes trivalent or tetravalent aromatic radicals which are optionally substituted by one or more halogen atoms, or mixtures thereof, it being possible for the trivalent aromatic radical optionally additionally to contain a carboxyl group as a substituent, X denotes the amide radical —CO—NH— if Ar is trivalent, and if Ar is tetravalent denotes the imide radical of the formula

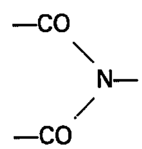

N in each case being bonded to R, $R_1$ denotes divalent aromatic radicals of the formulae

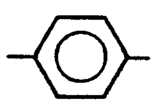
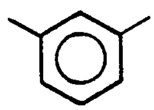
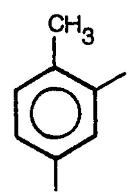

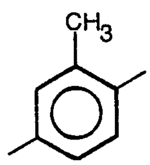

or

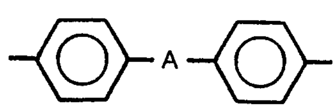

or mixtures thereof, in which A stands for $—CH_2—$, $—C(CH_3)_2—$, —O—, —S—, —SO—, $—SO_2—$, —CO—, —COO—, —CO—NH—, —NH—, —(N-alkyl)— having 1 to 20 C atoms, —(N-aryl)— having 6 to 20 C atoms or —N=N—, and n denotes an integer from 2 to 200.

2. Polyamidoimides according to Claim 1, characterized in that they contain both trivalent and tetravalent aromatic radicals Ar.

3. Polyimides according to Claim 1, characterized in that the tetravalent radical Ar represents a benzophenone radical.

4. Polyimides or polyamidoimides according to Claims 1 to 3, characterized in that the aromatic radical Ar represents a benzene radical.

5. Process for the preparation of soluble and/or fusible polyimides or polyamidoimides according to Claims 1 to 4, characterized in that tetracarboxylic acids or derivatives therof of the general formula

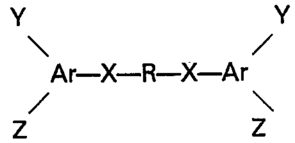

in which R, Ar and X have the abovementioned meaning and Y and Z either together denote the anhydride radical —CO—O—CO— or by themselves and independently of one another denote the radicals —COOH, —COCl or —$COOR_2$, in which $R_2$ stands for an alkyl radical having 1 to 20 C atoms or for an aryl radical having 6 to 20 C atoms, are reacted with aromatic diamines of the general formula

$$H_2N—R_1—NH_2$$

in which $R_1$ has the abovementioned meaning, in a manner which is known per se and the polyamide acids initially formed are subjected to cyclization chemically or by means of heat.

6. Process according to Claim 5, characterized in that tetracarboxylic acid dianhydrides are used as the tetracarboxylic acid derivatives.

7. Process according to Claims 5 or 6, characterized in that the tetracarboxylic acids or derivatives thereof are reacted directly after being formed, without being isolated from the reaction mixture, with aromatic diamines of the general formula

$$H_2N—R_1—NH_2$$

and the amide acids initially formed are cyclized chemically or by means of heat.

**Claims for the Contracting State: ES**

1. Process for preparing soluble and/or fusible polyimides or polyamidoimides of the general formula

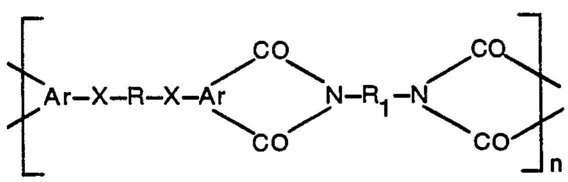

in which R denotes a divalent radical of the formula

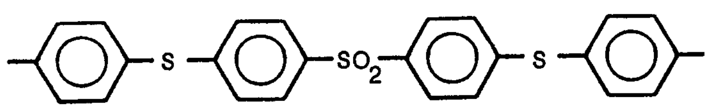

Ar denotes trivalent or tetravalent aromatic radicals which are optionally substituted by one or more halogen atoms, or mixtures thereof, it being possible for the trivalent aromatic radical optionally additionally to contain a carboxyl group as a substituent, X denotes the amide radical —CO—NH— if Ar is trivalent, and if Ar is tetravalent denotes the imide radical of the formula

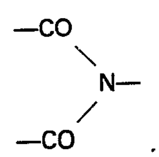

N in each case being bonded to R, $R_1$ denotes divalent aromatic radicals of the formulae

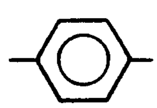

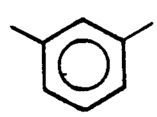

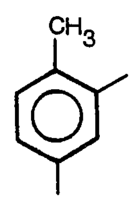

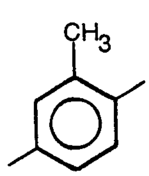

or

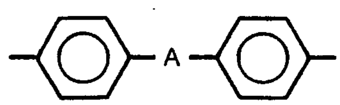

or mixtures thereof, in which A stands for $-CH_2-$, $-C(CH_3)_2-$, $-O-$, $-S-$, $-SO-$, $-SO_2-$, $-CO-$, $-COO-$, $-CO-NH-$, $-NH-$, —(N-alkyl)— having 1 to 20 C atoms, —(N-aryl)— having 6 to 20 C atoms or $-N{=}N-$, and n denotes an integer from 2 to 200, characterized in that tetracarboxylic acids or derivatives thereof of the general formula

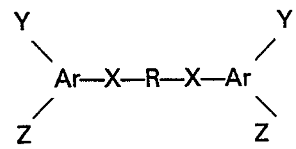

in which R, Ar and X have the abovementioned meaning and Y and Z either together denote the anhydride radical $-CO-O-CO-$ or by themselves and independently of one another denote the radicals $-COOH$, $-COCl$ or $-COOR_2$, in which $R_2$ stands for an alkyl radical having 1 to 20 C atoms or for an aryl radical having 6 to 20 C atoms, are reacted with aromatic diamines of the general formula

$$H_2N-R_1-NH_2$$

in which $R_1$ has the abovementioned meaning, in a manner which is known per se and the polyamide acids initially formed are subjected to cyclization chemically or by means of heat.

2. Process according to Claim 1, characterized in that the polyamidoimides contain both trivalent and tetravalent aromatic radicals Ar.

3. Process according to Claim 1, characterized in that the tetravalent radical Ar represents a benzophenone radical.

4. Process according to one of Claims 1 to 3, characterized in that the aromatic radical Ar represents a benzene radical.

5. Process according to one of Claims 1 to 4, characterized in that tetracarboxylic acid dianhydrides are used as the tetracarboxylic acid derivatives.

6. Process according to one of Claims 1 to 5, characterized in that the tetracarboxylic acids or derivatives thereof are reacted directly after being formed, without being isolated from the reaction mixture, with aromatic diamines of the general formula

$$H_2N-R_1-NH_2$$

and the amide acids initially formed are cyclized chemically or by means of heat.

For elblatt

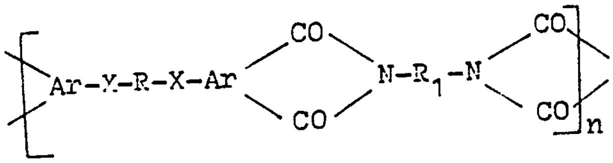

I

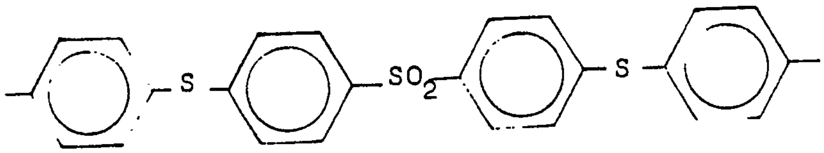

II

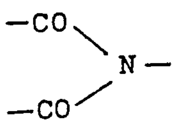

III

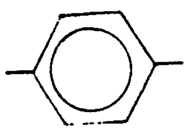

IV

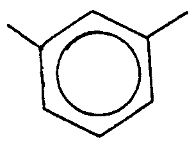

V

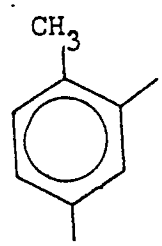

VI

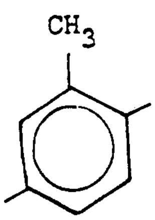

VII

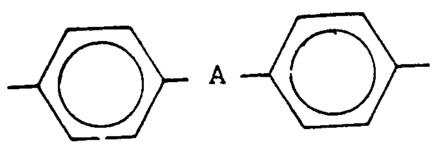

VIII

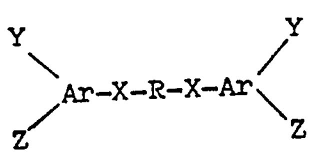

IX

$H_2N-R_1-NH_2$

X

Formelblatt Blatt 2

$H_2N-R-NH_2$ XI

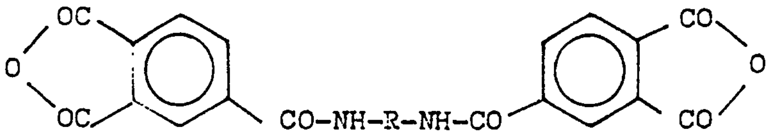

XII

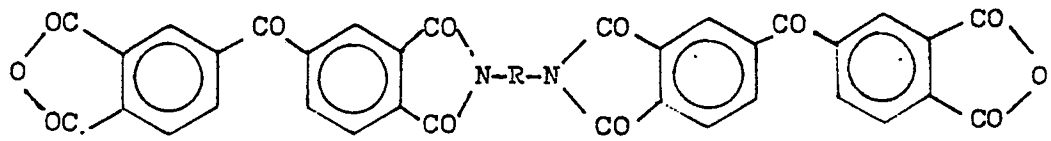

XIII

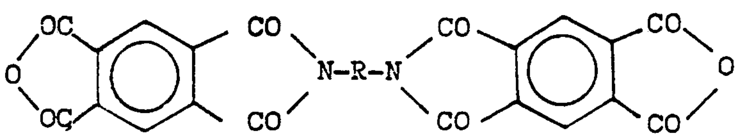

XIV